# EUROPEAN PATENT APPLICATION

(11) **EP 1 652 774 A1**
(43) Date of publication of application: **03.05.2006**
(21) Application number: 05109941.4
(22) Date of filing: 25.10.2005
(51) Int. Cl.: B65C 9/10, B65H 1/30, B65G 37/00

(54) **Unit for feeding stacked packing material to a packing machine**

(30) Priority: 28.10.2004 IT BO20040670
(71) Applicant: G.D SOCIETÀ PER AZIONI, 40133 Bologna (IT)
(72) Inventor: SPATAFORA, Mario, 40057, GRANAROLO (IT)
(74) Representative: Jorio, Paolo

(57) **Abstract**

A unit (1) for feeding stacked packing material (2) to a packing machine. The unit (1) has a group (4) of containers (3), each for housing a respective stack (2) of packing material; a first conveying device (6) for feeding the group (4) of containers (3) along a first path (P1); a pickup station (8) located at the end of the path (P1) to remove a single container (3) from the group (4) of containers (3); a second conveying device (9) for feeding a container (3) along a second path (P2) as of the pickup station (8); and a feed station (10) located along the second path (P2) to remove the stack (2) of packing material from a container (3), and to feed the stack (2) of packing material to the packing machine.

## Description

The present invention relates to a unit for feeding stacked packing material to a packing machine.

The present invention may be used to advantage in a packing machine for producing packets of cigarettes combined with coupons, to which the following description refers purely by way of example.

In the tobacco industry, packing machines for producing packets of cigarettes combined with coupons are used, in which the coupons are fed to a packing line by a revolving loader normally located over the packing machine and normally having longitudinal grooves housing respective stacks of coupons. The loader is rotated about a longitudinal, normally vertical axis to selectively align the grooves with the input of a normally vertical hopper, which receives one stack of coupons at a time, and has an output fitted with an extracting device for extracting and feeding the coupons one at a time to the packing line.

Feeding the coupons as described above has various drawbacks, on account of the fairly limited capacity of the loaders, which must therefore be replaced repeatedly during each operating cycle and require continual use of skilled labour. Moreover, given their size and weight, assembly of the loaders, which is normally performed by hand over the packing machine, calls for considerable effort on the part of the fitters and, at times, also stoppage of the packing machine.

A packing machine has been proposed comprising a loading station having a coupon input and a power take-off; and a coupon truck store having a number of containers for respective stacks of coupons, and connectable removably to the loading station to cooperate, when connected to the loading station, with the power take-off and successively move the containers through an unloading position, in which each container is engaged by an extracting device for extracting and transferring the relative stack to the coupon input. The total loading capacity of the coupon stack feed unit of the truck store described above, however, is relatively small in proportion to the total size involved.

It is an object of the present invention to provide a unit for feeding stacked packing material to a packing machine, designed to eliminate the above drawbacks and which, in particular, is cheap and easy to produce.

According to the present invention, there is provided a unit for feeding stacked packing material to a packing machine, as claimed in the accompanying Claims.

A non-limiting embodiment of the present invention will be described by way of example with reference to the accompanying drawings, in which:
Figure 1 shows a schematic side view, with parts removed for clarity, of a preferred embodiment of the feed unit according to the present invention;
Figure 2 shows a schematic plan view, with parts removed for clarity, of the Figure 1 feed unit;
Figure 3 shows a section along line III-III in Figure 1;
Figure 4 shows a view in perspective of a container of the Figure 1 feed unit;
Figure 5 shows a schematic side view, with parts removed for clarity, of a further embodiment of the Figure 1 feed unit;
Figure 6 shows a schematic view in perspective, with parts removed for clarity, of a further embodiment of the Figure 1 feed unit.

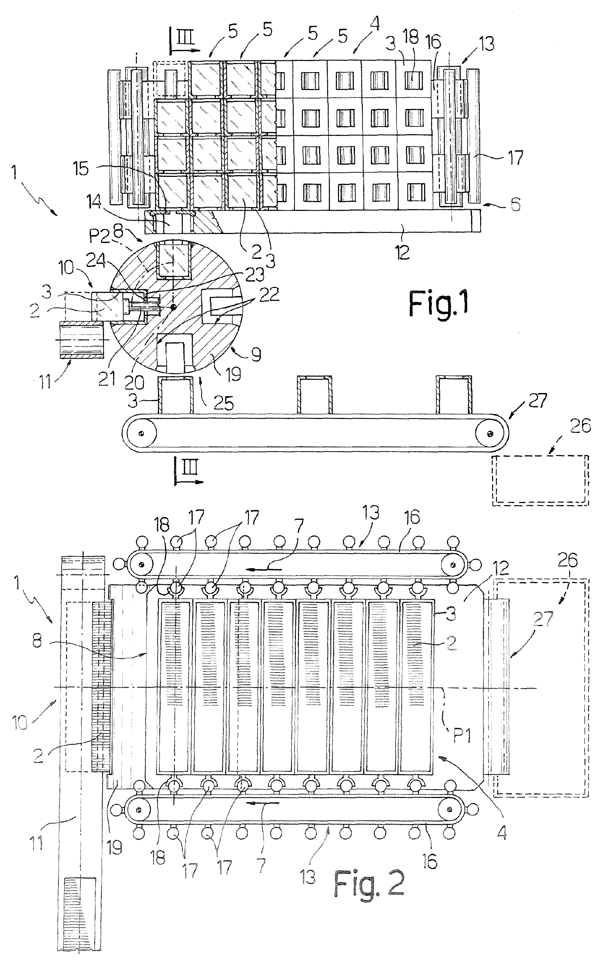

Number 1 in Figures 1 to 3 indicates as a whole a packing material feed unit for feeding stacks 2 of coupons to a packing machine (not shown). Feed unit 1 comprises a number of containers 3 arranged to define a group 4 of containers 3; group 4 comprises a number of side by side columns 5 of containers 3, each column comprising a number of superimposed containers 3 (Figure 1); and each container 3 is parallelepiped-shaped and contains a stack 2 of coupons.

Feed unit 1 also comprises a conveying device 6 for feeding group 4 of containers 3 along a path P1 in a travelling direction 7; and a pickup station 8 located at the end of path P1 to remove one container 3 from group 4 of containers 3. A conveying device 9 is located at pickup station 8 to feed each container 3 along a path P2 having a vertical initial portion perpendicular to path P1. A feed station 10 is located along path P2, where the stack 2 of coupons inside a container 3 is expelled from container 3 and fed to the packing machine. Downstream from conveying device 9, a belt conveyor 11 extends from feed station 10 to receive and feed a stack 2 of coupons to the packing units (not shown) of the packing machine, and is preferably integrated in the packing machine.

Conveying device 6 comprises a horizontal surface 12 supporting group 4 of containers 3 in sliding manner; and a feed device 13 for pushing group 4 of containers 3 along path P1, at the end of which, pickup station 8 removes from the bottom of a column 5 of containers 3 the container 3 resting directly on horizontal surface 12. More specifically, pickup station 8 comprises a through hole 14 formed through horizontal surface 12; and a closing device 15 movable between a closed position preventing passage of a container 3 through hole 14, and an open position permitting passage of a container 3 through hole 14.

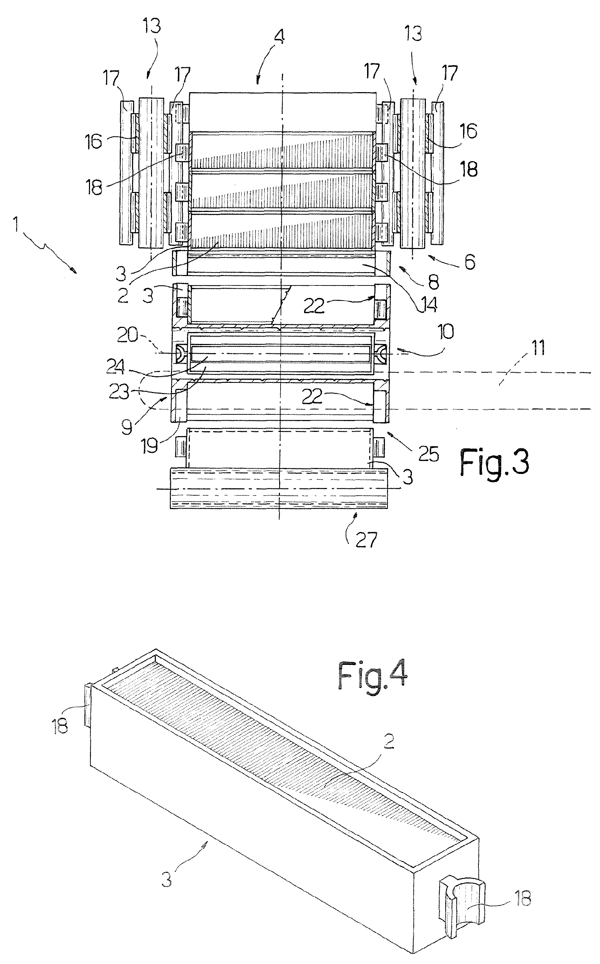

As shown in Figure 2, feed device 13 comprises two endless chains 16 located on opposite sides of group 4 of containers 3, and each supporting a number of vertical push members 17. As shown in detail in Figure 4, each container 3 comprises two connecting bodies 18 located at opposite ends of container 3, and which engage and slide freely vertically along a respective pair of push members 17.

Conveying device 9 comprises a drum 19 rotating about a horizontal axis of rotation 20 perpendicular to the Figure 2 plane. Drum 19 is located beneath through hole 14, comprises a pusher 21 movable perpendicularly to axis of rotation 20 of drum 19, and has a number of peripheral seats 22, each for receiving a respective container 3. Each container 3 comprises a rear wall 23 having a through opening 24 (Figure 3), through which pusher 21 moves to expel stack 2 of coupons from container 3. More specifically, drum 19 rotates between pickup station 8, where it receives a container 3 inside a respective peripheral seat 22; feed station 10, where it unloads stack 2 of coupons onto belt conveyor 11 by means of a horizontal movement of pusher 21; and an unloading station 25, where it unloads the empty container 3 inside a collecting space 26 for empty containers 3.

In the Figure 2 embodiment, feed unit 1 comprises a conveying device 27 located beneath drum 19 and for receiving the empty container 3 by gravity from drum 19, and transferring the empty container 3 from conveying device 9 to collecting space 26. In an alternative embodiment not shown, conveying device 27 is dispensed with, and collecting space 26 is located beneath drum 19 to receive containers 3 by gravity directly from drum 19.

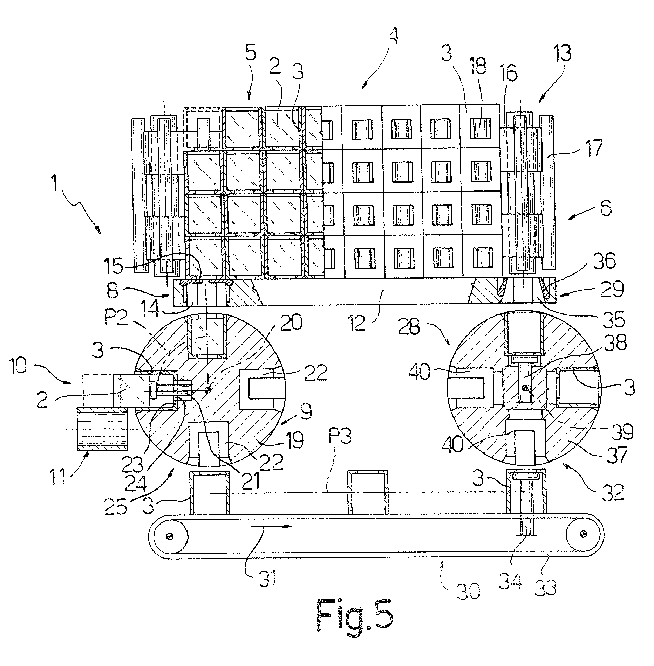

In an alternative embodiment shown in Figure 5, feed unit 1 comprises a conveying device 28 for receiving an empty container 3 from conveying device 9, and feeding the empty container 3 to a return station 29. A belt conveyor 30 is interposed between conveying device 9 and conveying device 28, to transfer empty containers 3, along a path P3 parallel to path P1 and in a travelling direction 31 opposite travelling direction 7, between unloading station 25 at conveying device 9, and a loading station 32 at conveying device 28. Belt conveyor 30 comprises two side by side, endless belts 33 (only one shown in Figure 5) ; and a pusher 34 located between the two belts 33 at loading station 32, and movable perpendicularly with respect to travelling direction 31.

Return station 29 is located along path P1, on the opposite side to pickup station 8, and reinserts the empty container 3 inside group 4 of containers 3, at the bottom of a column 5 of containers 3, and directly onto horizontal surface 12. Return station 29 comprises a through hole 35 formed through horizontal surface 12; and a closing device 36 movable between a closed position preventing passage of a container 3 through hole 35, and an open position permitting passage of a container 3 through hole 35.

Conveying device 28 comprises a rotary drum 37, which is located beneath through hole 35, comprises a pusher 38 movable perpendicularly to an axis of rotation 39 of drum 37, and has a number of peripheral seats 40, each for receiving an empty container 3. More specifically, drum 37 rotates between loading station 32, where it receives an empty container 3 inside a respective peripheral seat 40 by means of an upward movement of pusher 34, and return station 29, where it moves container 3 through hole 35 onto horizontal surface 12 by means of an upward movement of pusher 38.

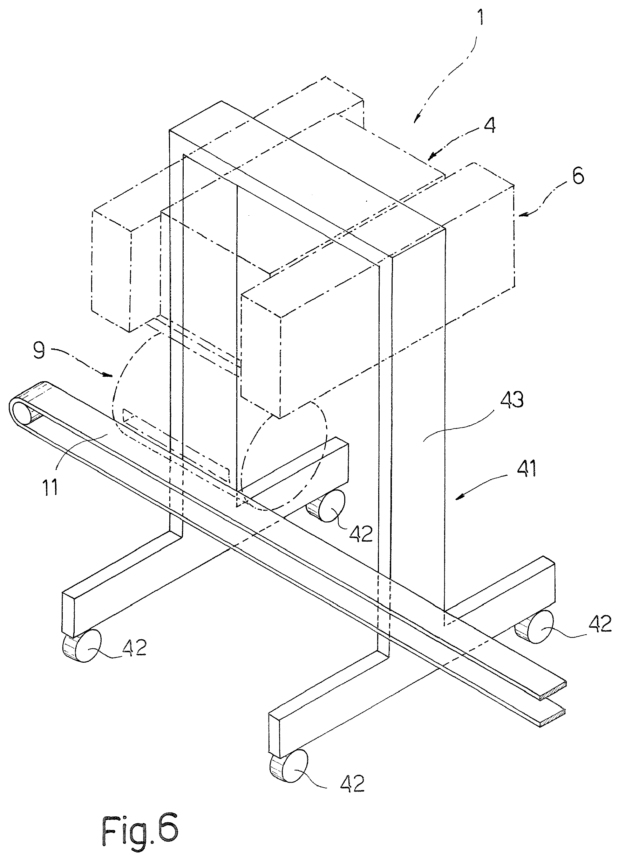

In a further embodiment shown in Figure 6, feed unit 1 is mounted on a trolley 41 comprising a number of wheels 42, and a frame 43 supporting conveying device 6, group 4 of containers 3, and conveying device 9.

Feed unit 1 as described above is cheap and easy to produce, and is extremely compact in relation to its considerable storage capacity.

Given its numerous advantages, feed unit 1 as described above may also be used to advantage on other automatic machines for packing products other than cigarettes, and for supplying the automatic machines with any type of packing material other than coupons. For example, feed unit 1 as described above may be used for feeding labels to a bottling machine or food labels to a food packing machine.

## Claims

1. A unit for feeding stacked packing material to a packing machine; the unit (1) comprises a group (4) of containers (3), each for housing a respective stack (2) of packing material, and a first conveying device (6) for feeding the group (4) of containers (3) along a first path (P1); and the unit is **characterized by** comprising a pickup station (8) located at the end of the path (P1) to remove a single container (3) from the group (4) of containers (3); a second conveying device (9) for feeding a container (3) along a second path (P2) as of the pickup station (8); and a feed station (10) located along the second path (P2) to remove the stack (2) of packing material from a container (3), and to feed the stack (2) of packing material to the packing machine.

2. A unit as claimed in Claim 1, wherein the group (4) of containers (3) comprises a number of side by side columns (5) of containers (3), and each column comprises a number of superimposed containers (3).

3. A unit as claimed in Claim 2, wherein the first conveying device (6) comprises a horizontal surface (12) supporting the group (4) of containers (3) in sliding manner; and a feed device (13) for pushing the group (4) of containers (3) along the first path (P1); and the pickup station (8) removes from the bottom of a column (5) of containers (3) the container (3) resting directly on the horizontal surface (12).

4. A unit as claimed in Claim 3, wherein the pickup station (8) comprises a through hole (14) formed through the horizontal surface (12); and a closing device (15) movable between a closed position preventing passage of a container (3) through the through hole (14), and an open position permitting passage of a container (3) through the through hole (14).

5. A unit as claimed in Claim 3 or 4, wherein the second conveying device (9) comprises a first drum (19) rotating about an axis (20) of rotation, and having a number of peripheral seats (22), each for receiving a container (3).

6. A unit as claimed in Claim 5, wherein the first drum (19) comprises a pusher (21) movable perpendicularly to the axis (20) of rotation of the first drum (19); and each container (3) comprises a through opening (24) formed through a rear wall (23) of the container (3) and through which the pusher (21) moves.

7. A unit as claimed in any one of Claims 1 to 6, wherein a collecting space (26) is provided to receive the empty containers (3).

8. A unit as claimed in Claim 7, wherein the second conveying device (9) transfers an empty container (3) directly to the collecting space (26).

9. A unit as claimed in Claim 7, wherein a third conveying device (27) is provided to transfer an empty container (3) from the second conveying device (9) to the collecting space (26).

10. A unit as claimed in any one of Claims 1 to 6, wherein a fourth conveying device (28) is provided to receive an empty container (3) from the second conveying device (9), and to feed the empty container (3) to a return station (29) where the empty container (3) is reinserted inside the group (4) of containers (3).

11. A unit as claimed in Claim 10, wherein the return station (29) is located along the first path (P1), on the opposite side to the pickup station (8).

12. A unit as claimed in Claim 11, wherein the group (4) of containers (3) comprises a number of side by side columns (5) of containers (3), and each column comprises a number of superimposed containers (3); the first conveying device (6) comprises a horizontal surface (12) supporting the group (4) of containers (3) in sliding manner, and a feed device (13) for pushing the group (4) of containers (3) along the first path (P1); the pickup station (8) removes from the bottom of a column (5) of containers (3) the container (3) resting directly on the horizontal surface (12); and the return station (29) inserts an empty container (3) into the bottom of a column (5) of containers (3), so that the empty container rests directly on the horizontal surface (12).

13. A unit as claimed in Claim 12, wherein the return station (29) comprises a through hole (35) formed through the horizontal surface (12); and a closing device (36) movable between a closed position preventing passage of a container (3) through the through hole (35), and an open position permitting passage of a container (3) through the through hole (35).

14. A unit as claimed in Claim 13, wherein the fourth conveying device (28) comprises a rotary second drum (37) having a number of peripheral seats (40), each for receiving a container (3).

15. A unit as claimed in Claim 14, wherein the second drum (37) comprises a pusher (38) movable perpendicularly to an axis (39) of rotation of the second drum (37).

16. A unit as claimed in any one of Claims 1 to 15, wherein the first conveying device (6) comprises a horizontal surface (12) supporting the group (4) of containers (3) in sliding manner, and a feed device (13) for pushing the group (4) of containers (3) along the first path (P1); the feed device (13) comprises two endless chains (16) located on opposite sides of the group (4) of containers (3) and supporting a number of push members (17); and each container (3) comprises two connecting bodies (18) located at opposite ends of the container (3) and which engage a respective pair of push members (17).

17. A unit as claimed in Claim 16, wherein each connecting body (18) engages a push member (17) so as to slide freely along the push member (17).

18. A unit as claimed in any one of Claims 1 to 17, wherein a movable trolley (41) is provided, and comprises a frame (43) supporting the first conveying device (6), the group (4) of containers (3), and a number of wheels (42).

19. A unit as claimed in Claim 18, wherein the frame supports the second conveying device (9).
